# EUROPEAN PATENT APPLICATION

(11) **EP 4 814 427 A2**
(43) Date of publication of application: **30.09.2026**
(21) Application number: 26199134.3
(22) Date of filing: 26.04.2022
(51) Int. Cl.: F28D 7/00

(54) **COLD TRAP FOR EXTRACTING CHEMICAL SPECIES BY FREEZE DISTILLATION**

(30) Priority: 30.04.2021 US 202163182616 P
(62) Document number(s) of the earlier application(s) in accordance with Art. 76 EPC: 22727532.8 / 4 329 909
(71) Applicant: Paragon Space Development Corporation, Tucson, AZ 85714 (US)
(72) Inventor: HOLQUIST, Jordan Barr, Tucson, Arizona 85714 (US); BOWER, Chad E., Tucson, Arizona 85714 (US); JOYCE, Connor, Tucson, Arizona 85714 (US); JACOBI, Robert, Tucson, Arizona 85714 (US); JORDAN, Neil, Tucson, Arizona 85714 (US)
(74) Representative: Haseltine Lake Kempner LLP

(57) **Abstract**

A cold trap is designed to receive an incoming gas mixture and selectively deposit a chemical species on internal walls of the cold trap and exhausting undesired contaminant species from the cold trap. The cold trap includes a thermal control system designed to maintain a deposition temperature on the internal walls to achieve freeze distillation of the chemical species. The cold trap also includes an inlet and/or outlet configured to maintain a pressure in the cold trap to achieve selective deposition of the chemical species into a solid phase without condensing or depositing other chemical species. The thermal control system maintains isothermal conditions on the internal walls while rejecting heat generated in the cold trap to a cold environment outside of the cold trap. In some implementations, the selectively deposited chemical species is water and the cold environment is a lunar environment.

## Description

### INCORPORATION BY REFERENCE

A PCT Request Form is filed concurrently with this specification as part of the present application. Each application that the present application claims benefit of or priority to as identified in the concurrently filed PCT Request Form is incorporated by reference herein in its entirety and for all purposes.

### TECHNICAL FIELD

This disclosure relates to cold traps, and more particularly to cold traps designed for collecting and extracting a chemical species such as water from a contaminated gas mixture by freeze distillation.

### BACKGROUND

There are many techniques for separating chemical substances of interest from foreign or contaminating substances. Filtration may remove particles through fine physical barriers such as screens or sieves. Distillation separates components or substances from a liquid mixture by using selective boiling and condensation. Fractionation is a separation process in which a certain quantity of a mixture (gas, liquid, solid) is divided during phase changes. In fractional distillation, mixtures of liquids and gases are separated by differences in boiling point.

Cold traps are devices that generally condense vapors into liquid or solid form. Typically, vapors may be prevented from escaping into a pump, chamber, or other environment by using a cold trap. A baffle or section of a cold trap may be cooled to low temperatures so that when the vapor molecules contact a surface of the baffle or section of the cold trap, the vapor molecules convert into a liquid or solid form.

### SUMMARY

The systems, methods and devices of this disclosure each have several innovative aspects, no single one of which is solely responsible for the desirable attributes disclosed herein.

One innovative aspect of the subject matter described in this disclosure can be implemented in a cold trap. The cold trap includes an inlet for receiving a gas mixture comprising a desired chemical species and undesired chemical species, where the desired chemical species and undesired chemical species have different phase equilibria, and includes a body in fluid communication with the inlet and through which the gas mixture flows, where the body includes internal walls and one or more internal structural components. The cold trap further includes an outlet for exhausting at least the undesired chemical species from the cold trap, where the body is in fluid communication with the outlet, and a shell thermally exposed to an environment outside of the cold trap. The cold trap further includes a thermal control system configured to control a temperature of the internal walls and one or more internal structural components, where the thermal control system maintains a deposition temperature at a pressure that selectively deposits the desired chemical species to a solid phase on the internal walls and the one or more internal structural components without condensing or depositing the undesired chemical species.

In some implementations, the desired chemical species includes water and the undesired chemical species includes volatiles. The volatiles may include hydrogen, hydrogen sulfide, sulfur dioxide, ammonia, carbon dioxide, carbon monoxide, methane, ethylene, or mercury. In some implementations, the outlet modulates a backpressure to control the pressure in the body. In some implementations, the thermal control system cools the internal walls and one or more internal structural components to the deposition temperature and rejects heat absorbed by phase change to the environment outside the cold trap at the shell. In some implementations, the one or more internal structural components includes a plurality of baffles to increase a path length of the gas mixture flowing through the body, a plurality of tubes extending axially through the body, and a plurality of fins disposed on the tubes to increase mixing of the gas mixture flowing through the body. The thermal control system may include a working fluid flowing through the plurality of tubes, the plurality of tubes being thermally coupled to the internal walls, the one or more internal structural components, and the shell. The thermal control system may also include a pump to circulate the working fluid through the plurality of tubes to isothermalize the internal walls and the one or more internal structural components to within +/- 5K of the deposition temperature while absorbing heat generated in the body from selective deposition and rejecting the heat to the environment outside the cold trap. In some implementations, the environment outside the cold trap has a sink temperature equal to or less than about 110 K. In some implementations, the deposition temperature is between about 175 K and about 273 K at a pressure between about 2.6 Pa and about 611 Pa. In some implementations, the cold trap further includes an insulation layer disposed between the body and the shell, where the insulation layer thermally isolates the body from the shell. In some implementations, the thermal control system includes one or more thermosiphons connected to a heat sink or radiator element, where the one or more thermosiphons draw heat generated in the body from selective deposition to the heat sink or radiator element. In some implementations, the thermal control system includes one or more actuating radiators thermally coupled to the body and configured to operate in an open and closed position, where the closed position is insulated from the environment outside the cold trap and the open position is exposed to the environment outside the cold trap, and where the one or more actuating radiators are actuated to an open position in response to the internal walls of the cold trap exceeding a threshold temperature. In some implementations, the thermal control system includes one or more thermoelectric coolers thermally coupled to the body. In some implementations, the thermal control system includes one or more cryocoolers thermally coupled to the body.

Another innovative aspect of the subject matter described in this disclosure can be implemented in system having one or more cold traps. The system includes a first cold trap for receiving a gas mixture comprising multiple gas species having different phase equilibria, where the first cold trap includes a first thermal control system and a first pressure-regulating system to maintain a first temperature and first pressure to selectively deposit a first species to a solid phase in the first cold trap without condensing or depositing other species of the multiple gas species. The system further includes a second cold trap in fluid communication with the first cold trap, where the second cold trap includes a second thermal control system and a second pressure-regulating system to maintain a second temperature and second pressure to selectively deposit a second species to a solid phase in the second cold trap without condensing or depositing other species of the multiple gas species.

In some implementations, the first species includes water, and wherein the second species includes a volatile. In some implementations, each of the first cold trap and the second cold trap include a body having internal walls and one or more internal structural components and a shell thermally exposed to an environment outside the first and second cold traps.

Another innovative aspect of the subject matter described in this disclosure can be implemented in a method of selective deposition of one or more species in a cold trap. The method includes receiving a gas mixture in a body of a cold trap via an inlet, where the gas mixture includes at least a desired chemical species and undesired chemical species having different phase equilibria, the gas mixture being received at a first temperature and first pressure. The method further includes flowing the gas mixture through the body of the cold trap, selectively depositing the desired chemical species to a solid phase on internal surfaces of the body by maintaining the body at a deposition temperature and pressure without condensing or depositing the undesired chemical species, where the body is maintained at the deposition temperature using a thermal control system, and exhausting at least the undesired chemical species of the gas mixture from the cold trap via an outlet at a second temperature and second pressure.

In some implementations, the desired chemical species includes water and the undesired chemical species includes a volatile. In some implementations, maintaining the body at the deposition temperature includes circulating working fluid of the thermal control system through tubes extending axially through the body and through a region between the body and a shell disposed outside the body, where the shell is thermally exposed to an environment outside the cold trap.

### BRIEF DESCRIPTION OF THE DRAWINGS

Figure 1 shows a schematic diagram of an example system for extracting contaminated water ice from a surface by heating and capturing a contaminated gas mixture into one or more cold traps.
Figure 2 shows a phase diagram of water and various contaminants in lunar regolith.
Figure 3A shows a schematic diagram of a conceptual cold trap and its internal wall temperature without a thermal control system while performing freeze distillation.
Figure 3B shows a schematic diagram of a conceptual cold trap and its internal wall temperature with a thermal control system while performing freeze distillation.
Figure 4A shows a cross-sectional schematic illustration of an example cold trap including a thermal control system with heat pipes and thermosiphons according to some implementations.
Figure 4B shows a schematic illustration of a side view of the cold trap in Figure 4A.
Figure 5A shows a cross-sectional schematic illustration of an example cold trap including a thermal control system with actuating radiators according to some implementations.
Figure 5B shows a schematic illustration of a side view of the cold trap in Figure 5A.
Figure 6 shows a schematic diagram of an example cold trap including a thermal control system with a fluid loop structure according to some implementations.
Figure 7A shows a perspective view of an example cold trap for maintaining isothermal temperatures during freeze distillation according to some implementations.
Figure 7B shows a cross-sectional schematic illustration of the cold trap in Figure 7A including a thermal control system for maintaining isothermal temperatures during freeze distillation according to some implementations.
Figure 8 shows a flow diagram of an example method for selective deposition of one or more chemical species in a cold trap according to some implementations.

Like reference numbers and designations in the various drawings indicate like elements.

### DETAILED DESCRIPTION

### Introduction

While water is ubiquitous on earth, water is very rare and extremely valuable in space. Water is a key ingredient to life and is a key ingredient for long-term missions in space. Extended missions to the moon, Mars, near-Earth asteroids, and other destinations in space will require propellant such as hydrogen as well as life support consumables such as water and oxygen. However, there is a high cost to delivering supplies to space, and the burden of transporting propellant and life support consumables is substantial and limits further long-term space exploration and settlement. Thus, in-situ resource utilization (ISRU) to generate propellant and life support consumables is imperative to sustaining long-term missions in space. ISRU-derived propellant and life support consumables can achieve a sustained presence on the moon, and eventually human missions to Mars and beyond are possible.

Missions to the moon have revealed evidence that certain regions on the moon, including those permanently in shadow or near-permanently in shadow, contain substantial concentrations of water ice. Furthermore, missions by various probes have detected the presence of water ice on Mars and near-Earth asteroids. However, extracting pure water from such water ice is a challenge. For example, many water purification technologies may require moving parts or may not operate in a reduced or micro-gravity environment. In addition or in the alternative, water purification technologies may not withstand the harsh conditions in space or may require regeneration or resupply of components over time. In addition or in the alternative, water on the moon, Mars, or near-Earth asteroids contains various contaminants that water purification technologies may not be able to effectively remove, or at least such contaminants may degrade components of the water purification technologies over time. Once pure water is derived from regolith-based resources, the water may be used as a life support consumable or may be used to generate oxygen, which may then be used as a life support consumable or fuel in space applications. Moreover, the water may be used to generate hydrogen, which may be used as fuel in space applications.

Water may be frozen in regolith-based resources, such as in the form of water ice on the moon, on near-Earth asteroids, or on Mars. Studies have shown that water ice may exist in permanently shadowed regions in polar lunar craters in regolith at concentrations of about 5.6 ± 2.9% by mass. However, extracting the water ice from extraterrestrial soil (e.g., lunar or Martian soil) and isolating water from co-located contaminants present many challenges. Many extraction methods are undergoing active research and investigation. In some cases, the water ice may be mined using rovers or mining drills to excavate water from regolith-based resources. After excavation, the extracted water ice may be brought to a central processing plant. In some other cases, the water ice may be vaporized and captured in vapor form where drilling or digging in frigid conditions may be too problematic.

In addition to water, other chemical species may be recovered from regolith-based resources that are valuable commodities. These chemical species may include various organic or inorganic compounds that may be reused or sold. By way of an example, ammonia and salts of ammonium (e.g., ammonium phosphate or ammonium sulfate) may be extracted and used as fertilizer for crop production. In some implementations, sulfur dioxide may be combined with ammonia to be used as a fertilizer. Alternatively, sulfur dioxide may be used to create sulfuric acid, which is a useful chemical reagent in synthesis. In another example, ethylene may be extracted and used in plastics production or as a ripening hormone for fruits. In yet another example, methane or methanol may be extracted for use as a fuel. Methanol may be extracted and used as a solvent, coolant, or anti-freeze. It can also be used in fuel cells for power generation. Any chemical species recovered from regolith-based resources may be isolated, separated from water and other volatiles, and collected.

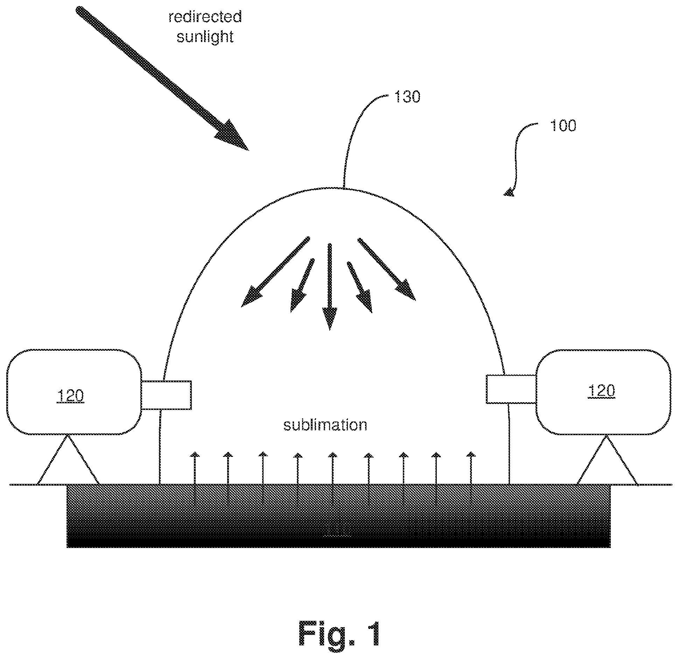

Figure 1 shows a schematic diagram of an example system for extracting contaminated water ice from a surface by heating and capturing a contaminated gas mixture into one or more cold traps. A mining system 100 may take advantage of sublimation to volatilize water ice 110 for deposition in cold traps 120. For example, the mining system 100 may utilize redirected sunlight to sublimate the water ice 110 via heating. In other examples, the mining system 100 may use radio-frequency waves, microwaves, or infrared radiation to sublimate the water ice 110. The water ice 110 may be converted to sublimated water mixed with various volatiles. In some implementations, the mining system 100 may further include a capture tent 130 that allows a small pressure to build, providing a way for effusion to transport the sublimated water to collect in the cold traps 120 via exhaust ports connected to the capture tent 130. The sublimated water may be deposited in solid form in the cold traps 120.

An approach for extracting contaminated water ice from regolith-based resources is not limited to the approach shown in Figure 1. Other approaches may be suitable for extracting contaminated water ice and collecting into cold traps. In one example embodiment, a heated coring drill is used for ground penetration and extraction of volatiles. A coring drill may be mounted on a rover. The coring drill penetrates the icy-soil surface and creates a core through the ground. The coring drill has electric heaters or other heating elements that are turned on in order to heat the icy regolith and sublimate volatiles (including water) into the coring drill. The volatiles are piped into one or more cold traps through a heated and insulated interface. In another example embodiment, an augur dryer is used for extraction of volatiles. Regolith is picked up by extraction using rovers and transferred to a hopper at an inlet of the augur dryer. The augur dryer is a long, wide pipe with an augur down the bore of the pipe. As the regolith is moved through the augur dryer by a motor, heating elements cause evolution of volatiles from the regolith. The volatiles (including water) are collected by one or more cold traps while the dried regolith is discarded at an outlet of the augur dryer. In another example embodiment, a regolith heating drum is used for extraction of volatiles. Regolith is transferred into a drum by a rover. Once full, the drum rotates and walls are heated, exposing significant surface areas of the regolith mixture to heat and causing volatiles to evolve. These volatiles (including water) are piped out and collected by one or more cold traps through a fixed port. The foregoing approaches or other suitable approaches may be used for extracting volatiles and collecting contaminated water from regolith in one or more cold traps. As discussed in detail below, a cold trap of the present disclosure may be used for selectively depositing a chemical species such as water on internal walls of the cold trap.

Contaminated water may include various contaminants, such as water-soluble acids, ions, and compounds. For example, the sublimated water may be contaminated water including hydrogen sulfide (H₂S), ammonia (NH₃), sulfur dioxide (SO₂), and ethylene (C₂H₄), among other contaminants. Table 1 lists several compounds found in lunar water. Other possible contaminants may include, for example, chlorine (Cl₂) and hydrochloric acid (HCl), which may be found on Martian soil.

**Table 1**

| Compound | Concentration (% relative to H₂O) |
|---|---|
| H₂O | 100% |
| H₂S | 7.30% |
| NH₃ | 2.66% |
| SO₂ | 1.40% |
| C₂H₄ | 1.37% |
| CO₂ | 0.94% |
| CH₃OH | 0.67% |
| CH₄ | 0.28% |
| Hg | 0.36% |
| H₂ | 225% |
| CO | 8.09% |

Contaminants mixed with the water ice may need to be filtered out before reaching downstream systems. This allows water to be purified in a usable form. It will be understood, however, that other chemical species may be isolated instead of water for some applications. Notwithstanding, chemical purification processes in extracting water or other chemical species may add complexity and cost, not to mention limitations in operating in cold, micro-gravity environments. As such, many conventional purification techniques may not be available in extraterrestrial environments.

A cold trap can take advantage of the extremely cold temperatures in extraterrestrial environments to freeze out vapors. Using a cold trap for collecting water minimizes moving parts and consumables that can reduce cost and complexity. A simple passively-cooled cold trap can collect water by converting the water from vapor to solid phase. However, such a simple passively-cooled cold trap acts as a trap that collects all other volatiles and contaminants with the water. Contaminants may include corrosive acid gases like SO₂ and H₂S, toxic gases like NH₃ and CO, and explosive/reactive gases like H₂, C₂H₄, CH₄, and CH₃OH.

Each of the aforementioned contaminants condenses at a temperature below the freezing temperature of water. The phase equilibrium for each of the contaminants is different than water. Accordingly, the cold trap can be designed to selectively freeze water without condensing or depositing the other chemical species. This can be done by designing a cold trap so that its internal wall temperature is below the freezing point of water but above the condensation or freezing point of each of the contaminants. Reaching this temperature band and maintaining this temperature band during operation of the cold trap present many challenges.

The present disclosure relates to a cold trap designed to selectively deposit a certain chemical species from vapor to solid form on internal surfaces of the cold trap and exhaust other chemical species in vapor form from the cold trap. The cold trap uses a thermal control system configured to maintain isothermal conditions on the internal surfaces. An inlet and/or outlet assists in maintaining a certain pressure within the cold trap so that the pressure and temperature of the cold trap achieves selective deposition of the chemical species without condensing or depositing the other chemical species. The thermal control system is configured to reject heat generated in the cold trap to an environment outside the cold trap. In some implementations, the environment outside the cold trap is a lunar, Martian, or other extraterrestrial environment. In some implementations, the chemical species deposited in the cold trap includes water and the other chemical species exhausted from the cold trap includes contaminants. What is exhausted from the cold trap may undergo further processing in another cold trap, may undergo further processing in other downstream systems, or may be vented to the environment outside the cold trap.

A cold trap serves as a vessel or container for receiving gases and condensing/depositing the gases into solid form. In the present disclosure, the cold trap receives a gas mixture and selectively collects a particular chemical species without collecting other chemical species. The cold trap may include a housing with a gas inlet for receiving the gas mixture and a gas outlet for exhausting the gas mixture. The cold trap may further include a plurality of fins, baffles, pipes, walls and other surfaces in the housing for depositing and collecting the chemical species in the solid phase.

The temperature and pressure of the cold trap are controlled to cause the chemical species (e.g., water) to selectively deposit, and cause at least one or more volatiles to remain in a vapor phase, thereby separating the one or more volatiles. A phase change from a vapor phase to solid phase may be referred to as "deposition," and a phase change from vapor phase to solid phase may be referred to as "freezing." However, as used herein, selectively converting the chemical species in the vapor phase to a solid phase may be generally referred to as "selective deposition," "selective freezing," or "freeze distillation." In some implementations, the one or more volatiles in the vapor phase may be vented out through the outlet. What remains in the cold trap may be the desired chemical species in the solid (e.g., frozen) phase.

A deposition temperature is a temperature equal to or below a freezing point of the desired chemical species that converts the chemical species from a vapor phase to a solid phase. The deposition temperature is simultaneously a temperature above a freezing point or condensation point of one or more undesired chemical species. The deposition temperature may be selected at a particular pressure so that the desired chemical species selectively deposits without condensing or depositing the one or more undesired chemical species. As a result, the desired chemical species is retained in solid form and the undesired chemical species is exhausted in vapor form. The deposition temperature and pressure may be selected by analyzing a phase diagram of the desired chemical species and the undesired chemical species. It will be understood that the desired chemical species may include multiple chemical species for collection in some instances, and that the undesired chemical species may include multiple chemical species in many instances.

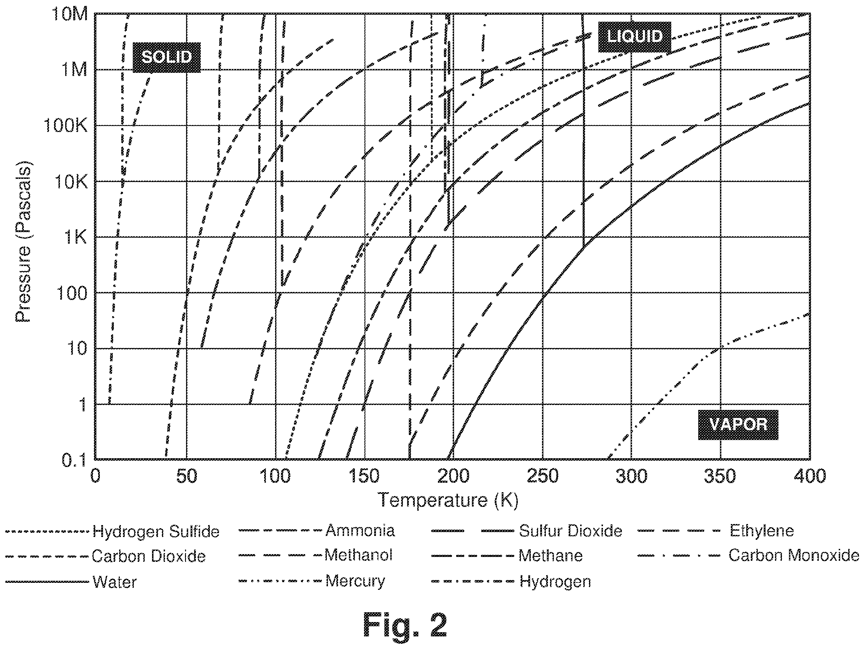

Figure 2 shows a phase diagram of water and various contaminants in lunar regolith. The phase diagram shows lines of phase equilibrium or phase boundaries for chemical species, where phase transitions occur along the lines of the phase equilibrium. The phase diagram may be a pressure versus temperature phase diagram showing lines of phase equilibrium between the three phases of solid, liquid, and gas. In Figure 2, phase equilibria are shown for water, hydrogen sulfide, carbon dioxide, ammonia, methanol, mercury, sulfur dioxide, methane, hydrogen, ethylene, and carbon monoxide. At a given pressure, the deposition temperature of water is higher than the deposition temperature of the other chemical species such as methanol. Specifically, a phase boundary signifying a phase transition from vapor phase to solid phase is higher (or more to the right-hand side) for water than the other chemical species. This means that a cold trap can be designed to operate at a temperature that is below the water-ice deposition temperature but above the methanol deposition temperature for a particular operating pressure. This prevents methanol and the other contaminants with lower deposition or condensation temperatures from forming in the cold trap. That way, the cold trap can significantly reduce the amount of contaminants which are present in the collected ice. The collected ice may be further purified into potable water or converted to fuel (e.g., H₂ and O₂) by downstream systems.

By way of an example, if the operating pressure were at 600 Pa total pressure, then the cold trap may operate at a temperature band between about 247 K and about 273 K for selective deposition of water. However, it will be understood that the temperature band may be wider or smaller depending on what contaminants are present in the gas mixture and at what partial pressures. As such, though the total pressure may be 600 Pa in the cold trap, if the partial pressure of methanol were low (e.g., only 0.67% volume fraction) then the lower temperature minimum can be as low as about 185 K. And if the partial pressure of water were less than 600 Pa then the upper temperature maximum can be reduced by a few degrees. If the operating pressure were at 2.6 Pa total pressure, then the cold trap may operate at a temperature band between about 175 K and about 220 K for selective deposition of water. Below such temperatures, the concentration of a contaminant such as methanol significantly increases. In some implementations, a deposition temperature of the cold trap is set between about 175 K and about 273 K at a pressure between about 2.6 Pa and about 611 Pa.

The cold trap of the present disclosure selectively deposits a desired chemical species such as water over other gases present in the cold trap by maintaining a set internal deposition surface temperature. There are some challenges to designing a cold trap that effectively maintains this set internal surface temperature and allows for a controlled surface temperature adjustment as deposition occurs.

One such challenge relates to the effect of spatial and temporal gradients when collecting the desired chemical species in the cold trap. Radially, a deposited chemical species in solid form increases in thickness over time, and its insulative heat transfer resistance may increase proportionally with thickness and accumulation time. This renders thicker regions less efficient in heat rejection. Axially or longitudinally along the flow pathway of the gas mixture, the desired chemical species will deposit in greater amounts closer towards an inlet than an outlet of the cold trap. In other words, more deposition will take place initially at the inlet. However, as thickness effects limit deposition efficiency over time, deposition of the desired chemical species will advance axially towards the outlet. Temporally, the overall deposition efficiency will decrease over time as the aforementioned effects of spatial gradients take place. The thermal control system may adjust the deposition surface temperature to compensate for these spatial and temporal gradients and improve deposition. Collection of the desired chemical species may end when the cold trap is no longer capable of performing freeze distillation and the cold trap may be considered "full."

Another such challenge relates to rejection of heat due to heat generated from the latent heat of phase change of deposition as well as heat from incoming gases. With the latent heat of phase change of deposition, the amount of heat generated can be calculated from the enthalpy of fusion plus the enthalpy of vaporization. An average enthalpy of 2,800 kJ/kg is the amount of heat generated for the latent heat of phase change of water deposition. Without thermal control, heat rejection from internal surfaces of the cold trap will vary radially, axially, and temporally. Varied heat rejection along the cold trap can create local cold spots that can lead to undesired chemical species condensing/depositing within the cold trap.

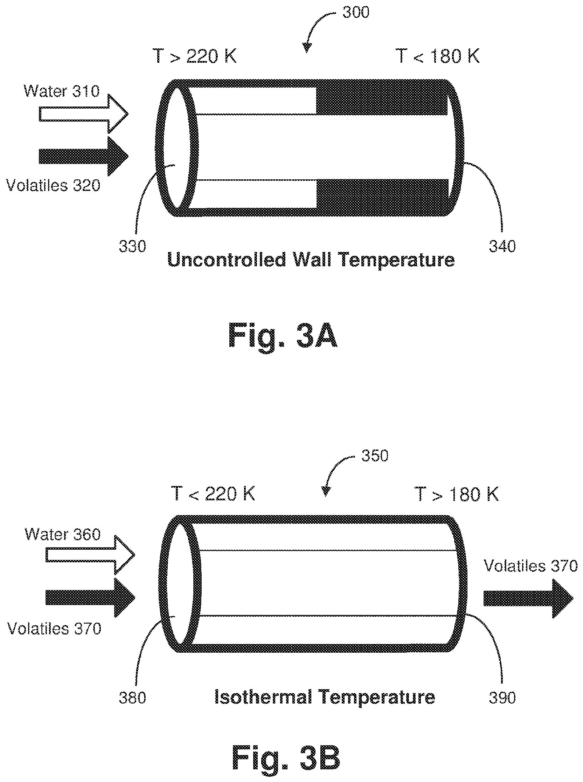

Figure 3A shows a schematic diagram of a conceptual cold trap and its internal wall temperature without a thermal control system while performing freeze distillation. Incoming water 310 and volatiles 320 enter a cold trap 300 at an inlet 330. Volatiles 320 may exit the cold trap 300 at an outlet 340. The pressure of the cold trap 300 may be established at about 6 Pa. Even if the cold trap 300 is cooled to a desired temperature (e.g., about 220 K) for selective deposition of water 310, maintaining the desired temperature on internal walls of the cold trap 300 may not occur without a suitable thermal control system. As shown in Figure 3A, a temperature of the cold trap 300 closer to an inlet 330 may be greater than 220 K. Ice forms and its thickness increases, making heat rejection more difficult in regions closer to the inlet 330. Assuming that the wall temperature starts at about 220 K, only water-ice collects. Over time, however, the wall temperature will drop due to insulation of the flow path from the heat rejection mechanism (i.e., wall). Initially, the outlet 340 may be colder because heat is being collected and rejected near the inlet 330. The outlet 340 may be closer in temperature to the outside environment, which may be extremely cold. The temperature closer to the outlet 340 may be less than 180 K. Hence, cold spots are more likely to form closer to the outlet 340 than at the inlet 330. These local cold spots may cause undesired volatiles 320 to deposit, where such volatiles 320 may deposit at temperatures less than 180 K. Without a suitable thermal control system to maintain isothermal conditions along internal walls and deposition surfaces of the cold trap 300, undesired volatiles 320 may deposit along with water 310 in the cold trap. It will be understood that the values of 220 K and 180 K are chosen based on a given pressure and gas composition. The target temperature values may change depending on an operational pressure and incoming gas composition. A smaller or larger temperature spread may be used, where a smaller temperature spread is associated with higher purity.

Cooling incoming gas flow to cause selective deposition while handling spatial and temporal gradients and while also managing heat distribution and heat rejection is a significant technical challenge. If any part of the cold trap's internal wall is allowed to get too cold, then undesired chemical species may condense within the cold trap in localized regions. Local cold spots may form due to lack of insulation or lack of local heat removal turndown where the desired chemical species is not depositing. Instead, more of the undesired chemical species may condense at such local cold spots. This could lead to contamination of the collected chemical species. Additionally, this could have deleterious effects on the cold trap's performance, lifetime, and robustness. This could also lead to harm to downstream systems that are not capable of handling certain reaction products.

The cold trap of the present disclosure is designed to manage heat distribution within the cold trap and heat rejection out of the cold trap. The cold trap may include a suitable thermal control system to manage heat distribution and heat rejection. The thermal control system may be configured to maintain isothermal temperatures in the cold trap within a desired temperature band. The thermal control system prevents local cold spots by maintaining spatial and temporal isothermalization. Moreover, the thermal control system may maintain isothermal conditions while optimizing mass, volume, power, collection efficiency, and complexity of the cold trap. By way of an example, the cold trap may be designed to meet certain performance requirements. Specifically, the cold trap may be sized to meet a certain collection rate, designed to receive an uncontrolled incoming flow of gases, designed to consume minimal amount of power, etc. The cold trap may include a thermal control system that maintains isothermalization in the cold trap within certain performance requirements.

Figure 3B shows a schematic diagram of a conceptual cold trap and its internal wall temperature with a thermal control system while performing freeze distillation. Incoming water 360 and volatiles 370 enter a cold trap 350 at an inlet 380. Volatiles 370 may exit the cold trap 350 at an outlet 390. The pressure of the cold trap 350 may be established at about 6 Pa. A thermal control system (not shown) regulates temperature in the cold trap 350 to prevent formation of local cold spots. The thermal control system isothermalizes internal walls of the cold trap 350 so that the internal walls remain within a desired temperature band between the inlet 380 and the outlet 390. As shown in Figure 3B, the cold trap 350 is maintained at a temperature between about 180 K and about 220 K throughout the length of the cold trap 350. As a result, water 360 is deposited on internal walls of the cold trap 350 throughout the length of the cold trap 350. Volatiles 370 are exhausted out of the cold trap 350 without depositing or condensing.

A cold trap may be designed to meet one or more performance requirements. The thermal control system of the cold trap may be optimized accordingly. Considerations when configuring the cold trap and thermal control system include but are not limited to collection rate of the desired chemical species, amount of heat rejection, temperature of internal surfaces, temperature and pressure of incoming gas flow, efficiency of water collection/minimization of water loss in the exhaust, total desired ice capacity in a given collection cycle, and environment temperature. Other considerations may further include but are not limited to size/dimensions, mass, cost, power, and complexity. While at least some or all of the aforementioned considerations influence design configurations of the cold trap of the present disclosure, it will be understood that other considerations may be factored when designing a cold trap.

In some implementations, the cold trap may be configured to achieve a minimum collection rate of the desired chemical species. Collection rate may be increased with increased size or surface area. Radiator surface area for heat rejection increases proportionally with increased size or surface area for collection. Thus, the collection rate of the desired chemical species may be related to any limitations on dimensions, sizing, and geometry of the cold trap. The collection rate may also be influenced by the incoming flow rate, temperature, or pressure of a gas mixture. Furthermore, the collection rate may be affected by turbulence and mixing of the gas flow. In some implementations, a water collection rate in a cold trap can be between about 0.1 kg/hour and about 10 kg/hour.

In some implementations, the cold trap may be configured to achieve a certain amount of heat rejection. The amount of heat rejection may be calculated based at least in part on an average enthalpy of deposition and a collection rate of the desired chemical species. Thus, the thermal control system may be estimated to manage certain amounts of heat loads for heat rejection. By way of an example, the thermal control system of the cold trap may be configured to reject heat at a rate between about 2 kW and about 3 kW.

In some implementations, the cold trap may be configured to maintain isothermal temperatures within a certain temperature band on internal surfaces of the cold trap. The cold trap may operate at a selected pressure, which can be controlled by regulating partial pressures of incoming gas and/or partial pressures of outgoing gas. Depending on the operating pressure in the cold trap, the thermal control system can maintain a temperature within the cold trap that selectively deposits the desired chemical species without condensing or depositing other chemical species. In some implementations, internal surfaces may be maintained at a temperature between about 247 K and about 273 K for a pressure of about 600 Pa. In some implementations, internal surfaces may be maintained at a temperature between about 175 K and about 220 K for a pressure of about 2.6 Pa. The operating pressure of the cold trap may be controlled to be between about 2.6 Pa and about 600 Pa in some implementations. It will be understood that the temperature bands may be wider or narrower depending on the composition of the gas mixture and the partial pressures of each of the gas species.

In some implementations, a temperature of an environment outside the cold trap may be selected to be colder than the deposition temperature maintained on internal surfaces of the cold trap. The environment outside the cold trap may serve as a heat sink for heat rejection. That way, heat generated in the cold trap may be rejected so that the internal surfaces of the cold trap may be cooled. In some implementations, the environment outside the cold trap may have a temperature equal to or less than about 110 K, or between about 4 K and about 110 K. For +example, the environment outside the cold trap may be a lunar, Martian, or other extraterrestrial environment.

The cold trap of the present disclosure may include a body having internal surfaces, an inlet for receiving a gas mixture of a desired chemical species and undesired chemical species, and an outlet for exhausting at least the undesired chemical species. The internal surfaces may include internal walls and one or more internal structural components such as fins and baffles. The body may be in fluid communication with the inlet and the outlet. The gas mixture may flow through the cold trap from the inlet to the outlet. In particular, the gas mixture may flow axially, vertically, horizontally, circumferentially, or circuitously through the cold trap from the inlet to the outlet. The desired chemical species may collect and deposit in a solid phase on the internal surfaces of the cold trap.

The body of the cold trap may provide a volume through which the gas mixture flows. The body of cold trap may also be referred to as a housing of the cold trap. In some implementations, the body of the cold trap may be any suitable geometric shape such as cylindrical, spherical, cubical, cuboidal, conical, or ellipsoidal. The volume and shape of the body may be optimized for collecting the desired chemical species. The volume and shape of the body may also be optimized for facilitating the flow of the gas mixture through the body, which may be driven by a pressure drop between the inlet and the outlet. In some implementations, the body may be cylindrical. In some implementations, the cylindrical body may be at least 5 inches in diameter and at least 20 inches in length.

The body may be enclosed by internal walls, and the one or more internal structural components may be interspersed or distributed within the body. In some implementations, a material of the body can include a suitable metal such as aluminum, aluminum alloy, stainless steel, stainless steel alloy, titanium, titanium alloy, or a corrosion-resistant alloy such as Hastelloy^{®} or Inconel^{®}. The internal structural components of the body may serve one or more functions. In some implementations, the internal structural components increase surface area within the body so that more of the desired chemical species may deposit in solid form in the cold trap. The gas mixture runs into more internal surfaces when flowing through the body. In some implementations, the internal structural components promote turbulence and mixing so that the desired chemical species flow quicker and closer to internal surfaces of the body. This reduces a boundary layer adjacent to internal surfaces and improves efficiency of collection. In some implementations, the internal structural components increase a path length of the gas mixture flowing through the body. This increases a residence time of the gas mixture so that the gas mixture runs into more internal surfaces when flowing through the body.

In some implementations, the one or more internal structural components include a plurality of baffles. The baffles may be oriented orthogonal to a flow of the gas mixture. The baffles may be spaced apart and distributed along an axial length of the body. The baffles may increase a path length of the gas mixture flowing through the body. In some implementations, the one or more internal structural components include a plurality of fins. The fins are appendages to the internal walls or other internal surfaces. The fins may be spaced apart from one another and distributed throughout the body. In some implementations, the fins may be appendages extending from one or more tubes in the body. The fins may promote turbulence and mixing of the gas mixture. In some implementations, the one or more internal structural components include a plurality of tubes. The tubes may carry and circulate coolant for controlling a temperature of internal surfaces in the body and for rejecting heat from the body. The tubes may also be referred to as coolant lines, fluid lines, or "pipes." The tubes may extend axially along a length of the body. In addition to internal walls, the aforementioned baffles, fins, and tubes constitute internal surfaces on which the desired chemical species can deposit on. As used herein, internal surfaces refer to any internal walls, baffles, fins, tubes, and frost layers themselves on which the desired chemical species can deposit on.

In some implementations, the cold trap may include a shell disposed on or outside the body to reject heat to an environment outside the cold trap. The shell acts as a radiator or radiative surface through which heat is rejected to the outside environment. In some implementations, the shell constitutes the outer walls or outer surfaces of the cold trap, where the shell is thermally exposed to the environment outside the cold trap. In some implementations, the shell may be disposed around the body of the cold trap. The shell may also be referred to as a skin, outer wall, outer surface, radiative surface, radiative shell, radiator, or cover. In some implementations, the shell may be thermally coupled to the plurality of tubes transporting coolant. The surface area of the shell may be determined by an estimated radiative surface area for rejecting heat from the body, where the estimated radiative surface area depends at least in part on the collection rate of the desired chemical species.

In some implementations, an insulation layer is disposed between the shell and the body of the cold trap. The insulation layer may be thermally insulating and limit thermal conduction between the body and the shell. This prevent cold spots from forming in the body of the cold trap. The insulation layer thermally isolates the body from the shell so that isothermal conditions can be more effectively maintained. In some implementations, a thickness of the insulation layer may be varied along a length of the body.

In some implementations, pressure in the body may be controlled by a pressure control system. The pressure control system may include a valve, regulator, or variable restrictor coupled to the outlet of the cold trap. Pressure is regulated to a desired pressure in the body for a given temperature band to promote selective deposition of the desired chemical species. Pressure is also regulated to promote flow of gas mixture through the body of the cold trap. The pressure control system may control a backpressure so that the gas mixture flows from the inlet to the outlet via a pressure gradient-driven flow. Gases exiting the outlet may be exhausted to the environment outside the cold trap or to another (i.e., second) cold trap.

The cold trap further includes a thermal control system to control temperature in the cold trap. The thermal control system is configured to control a temperature of the internal surfaces as well as reject heat from the body to the shell. The thermal control system maintains isothermal conditions throughout the internal surfaces of the cold trap within a target temperature band so that the desired chemical species is selectively deposited without condensing or depositing the undesired chemical species. The thermal control system absorbs heat captured by incoming gas flow and generated by phase change and rejects that heat to the environment outside the cold trap. The thermal control system may include passive thermal control mechanisms, active thermal control mechanisms, or combinations thereof. In some implementations, the thermal control system includes one or more heat pipes and/or thermosiphons connected to a heat sink or radiator element. In some implementations, the thermal control system includes one or more actuating radiators thermally coupled to the body of the cold trap. In some implementations, the thermal control system includes one or more thermoelectric coolers thermally coupled to the body of the cold trap. In some implementations, the thermal control system includes one or more cryocoolers thermally coupled to the body of the cold trap. In some implementations, the thermal control system includes a pump and coolant for circulation through coolant lines thermally coupled to internal surfaces of the body, where the coolant can be a single-phase fluid or a two-phase fluid. Each of the foregoing thermal control systems is described below.

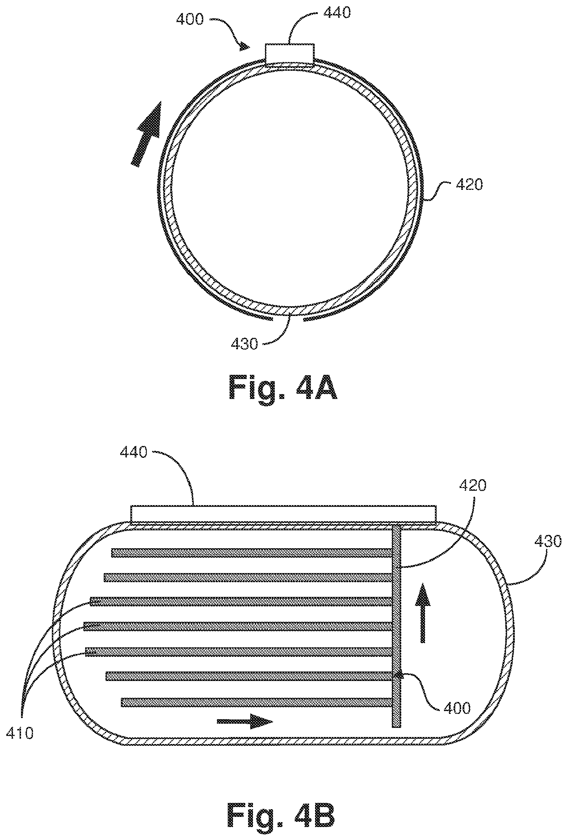

In some implementations, a thermal control system includes heat pipes and/or thermosiphons. Heat pipes function as passive heat exchanger. Working fluid is heated into a vapor phase in the heat pipe, then travels through the center of the heat pipe, and then cools to reach a liquid state by releasing heat to a heat sink. The working fluid moves back to the "hot" end of the heat pipe through a wick. Thermosiphons operate similarly but are oriented vertically and rely on gravity to move the working fluid rather than a wick. Both heat pipes and thermosiphons draw heat from "hotter" regions of a cold trap to "colder" regions, and ultimately the heat may be radiated from the system by a separate radiator element. Figure 4A shows a cross-sectional schematic illustration of an example cold trap including a thermal control system with heat pipes and thermosiphons according to some implementations. Figure 4B shows a schematic illustration of a side view of the cold trap in Figure 4A. In Figures 4A and 4B, the thermal control system 400 includes heat pipes 410 and thermosiphons 420. The heat pipes 410 may be arranged axially along the length of the cold trap 430. As a desired chemical species starts depositing at the beginning of the cold trap 430, the working fluid in the heat pipes 410 will absorb the heat of deposition and move down the length of the cold trap 430 as a vapor. The working fluid will lose heat back to the cold trap 430 as it travels down the length, isothermalizing the surface to a saturation temperature. Thus, the heat pipes 410 may isothermalize the surface of the cold trap 430 axially. The working fluid may remain in a vapor phase until it reaches thermosiphons 420. The thermosiphons 420 pass the heat vertically to a radiator element 440. The radiator element 440 may be a heat sink or radiative surface that rejects heat from the cold trap 430 to an outside environment. The thermosiphons 420 may isothermalize the surface of the cold trap 430 radially.

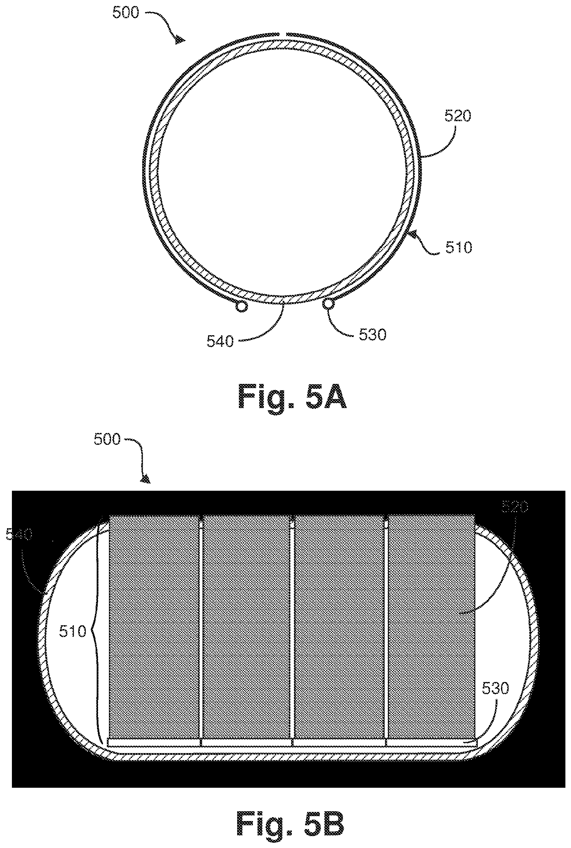

In some implementations, a thermal control system includes actuating radiators. Actuating radiators may also be referred to as thermal louvres or louvres. An inner wall of a radiating panel of an actuating radiator may have high emissivity, and an outer wall of the radiating panel of the actuating radiator may be insulated. Actuating radiators may actuate between a closed position or open position, where the inner wall provides high heat rejection in the open position and the outer wall provides low heat rejection in the closed position. Figure 5A shows a cross-sectional schematic illustration of an example cold trap including a thermal control system with actuating radiators according to some implementations. Figure 5B shows a schematic illustration of a side view of the cold trap in Figure 5A. In Figures 5A and 5B, the thermal control system 500 includes actuating radiators 510 having radiator panels 520 and torque tubes 530. The actuating radiators 510 may be disposed on a cold trap 540. In some implementations, the actuating radiators 510 wrap around the cold trap 540 and are actuated between an open and closed position by torque tubes 530. In some implementations, the torque tubes 530 may be shape memory alloy (SMA) torque tubes that are thermally coupled to the surface of the cold trap 540 such that the torque tubes 530 actuate upon absorbing enough heat. In some implementations, the actuating radiators 510 may operate passively and open when the surface conducts enough heat to the torque tubes 530 and the radiator panels 520. In some implementations, the actuating radiators 510 may operate actively by passing an electric current through the torque tubes 530 or adding heater cartridges into the torque tubes 530. The actuating radiators 510 may actuate in response to one or more temperature sensors placed in the cold trap 540. Specifically, the actuating radiators 510 may actuate to an open position in response to the internal walls of the cold trap exceeding a threshold temperature. In some implementations, the actuating radiators 510 may operate actively by adding a fluid loop into the torque tubes 530 and radiator panels 520, which increases a thermal capacity of the radiating panels 520, increases heat transfer through the radiator panels 520 in a closed position, and increases heat rejection through the radiator panels 520 in the open position. In Figures 5A and 5B, the radiator panels 520 are oriented in a closed position. Inner walls of the radiator panels 520 have high emissivity and face towards the cold trap 540 and outer walls of the radiator panels 520 are insulated and face away from the cold trap 540. When the radiator panels 520 are oriented in an open position, inner walls of the radiator panels 520 having high emissivity facilitate high heat rejection by exposing the inner walls to an outside environment. The surface of the cold trap 540 itself may have high emissivity to improve radiation out of the cold trap 540 when the open position exposes the surface of the cold trap 540 to the outside environment.

In some implementations, a thermal control system includes heat pumps to actively move heat from internal surfaces to external surfaces. In one case, heat pumps may include one or more thermoelectric coolers. Thermoelectric coolers provide cooling by passage of electric current through a junction of dissimilar metals, thereby forming a cold junction and a hot junction. Heat is removed from the cold junction to the hot junction. The thermoelectric coolers may be powered to effectively cool a surface of a cold trap. In another case, heat pumps may include one or more cryocoolers. Cryocoolers may sometimes be referred to as Stirling cryocoolers or Stirling coolers. Cryocoolers use a regenerative oscillating gas flow to create two semi-isothermal regions that are separated by an efficient thermal isolator. The two semi-isothermal regions are created by compressing (heating) cryogenic fluid in one region and moving the cryogenic fluid through the thermal isolator where it can expand (cool). The cooler side of the cryocooler may be attached to a surface of the cold trap for cooling. Thermoelectric coolers and/or cryocoolers may be powered to cool local regions of the cold trap at a high spatial resolution.

In some implementations, a thermal control system includes fluid channels and a heat-transfer fluid transported in the fluid channels. The thermal control system may further include a pump to move the heat-transfer fluid through the fluid channels. Heat-transfer fluid may also be referred to as a coolant or working fluid, and fluid channels may also be referred to as coolant lines, pipes, or tubes. The heat-transfer fluid may circulate through the fluid channels in a loop to actively cool internal surfaces of the body and draw heat from the body for rejection to an outside environment. The fluid channels may be positioned axially along a length of the body of the cold trap and thermally coupled to the internal walls and the one or more internal structural components of the body. The fluid channels may also be thermally coupled to the shell so that heat may be rejected from the body to the outside environment. In some implementations, the heat-transfer fluid may be a single-phase fluid or a two-phase fluid. For example, the heat-transfer fluid may be ammonia, propylene glycol in water, ammonia in water, Galden^{®} (e.g., Galden^{®} HT 135), Novec^{™} HFE (e.g., Novec^{™} HFE7000), or methanol.

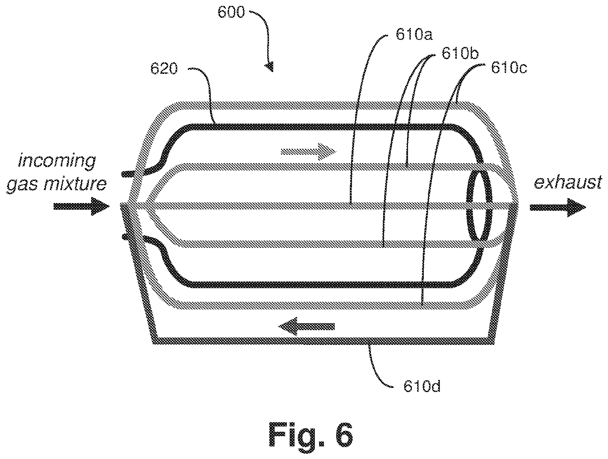

Figure 6 shows a schematic diagram of an example cold trap including a thermal control system with a fluid loop structure according to some implementations. A thermal control system 600 includes a fluid loop structure of coolant lines 610a, 610b, 610c, 610d. The coolant lines 610a, 610b, 610c, 610d carry working fluid across internal surfaces of a cold trap 620 and absorbs heat from the internal surfaces. Heat is passed from the "hot" end of the cold trap 620 and travels towards the "cold" end. Heat is absorbed by the working fluid at areas where a surface temperature is higher than the working fluid. Heat is rejected by the working fluid at areas where a surface temperature is lower than the working fluid. As shown in Figure 6, the fluid loop structure includes multiple coolant lines 610a, 610b, 610c, 610d extending along a length of the cold trap 620. Some coolant lines 610a extend axially along a center of the cold trap 620, some coolant lines 610b extend axially off-center from a central axis of the cold trap 620, and some coolant lines 610c extend along internal walls of the cold trap 620. To complete the fluid loop, a returning coolant line 610d is positioned outside a body of the cold trap 620 to cool the working fluid and reject heat. The returning coolant line 610d receives the working fluid from coolant lines 610a, 610b, 610c and returns the working fluid back to the coolant lines 610a, 610b, 610c. Though not shown in Figure 6, a pump is utilized to pump the working fluid through the coolant lines 610a, 610b, 610c, 610d. In the implementation shown in Figure 6, the returning coolant line 610d may funnel warmed working fluid to outside the cold trap 620 and then back to the cold trap 620. In some other implementations, the returning coolant line 610d may funnel warmed working fluid back through the center of the cold trap 620.

In some implementations, the fluid loop structure of the thermal control system 600 may be a single-phase fluid loop. Because the working fluid in a single-phase fluid loop will freeze at some point in non-operating cases, some heating element may be needed to thaw the working fluid prior to operation. The single-phase fluid loop structure may require only a simple gear pump or equivalent to move the working fluid. In some implementations, the fluid loop structure of the thermal control system 600 may be a two-phase fluid loop. In a two-phase fluid loop, the heat of deposition of ice or other chemical species is transferred into the heat of vaporization of the working fluid. As the working fluid is converted from a liquid to gas phase, a constant temperature at the surface of the cold trap is maintained. A pressure of the working fluid is controlled to ensure vapor-liquid phase transitions occur at the desired temperature. Some additional pressure control in a two-phase fluid loop may be required to maintain the cold trap's operational temperature range compared to a single-phase fluid loop.

In some implementations, a thermal control system further includes a heater. The heater serves to heat the collected chemical species by melting the collected chemical species into liquid or sublimating the collected chemical species into gas. The heater may operate when the cold trap is "full" and no longer collecting the desired chemical species. In some implementations, "full" capacity may occur when the amount of deposited chemical species occupies at least about 50% volume of the body, at least about 60% of the body, or at least about 70% of the body. The heater may heat up the internal surfaces of the cold trap to an elevated temperature to convert the solid chemical species into liquid or vapor form. Alternatively, the heater may heat up the working fluid circulating in the tubes of the thermal control system to convert the solid chemical species into liquid or vapor form. The liquid or vapor may be subsequently supplied to a downstream interface.

In some implementations, a thermal control system further includes one or more temperature sensors and pressure sensors. A temperature sensor serves to monitor the temperature of the internal surfaces of the cold trap. A pressure sensor serves to monitor the incoming gas flow pressure. The temperature and pressure sensors may provide feedback to the thermal control system for temperature control. In some implementations, multiple temperature sensors may be positioned along different locations of the thermal control system. This allows for greater assessment of temperature control and performance in the thermal control system. For instance, at least a first temperature sensor may be positioned proximate to an entrance of the cold trap and a second temperature sensor may be positioned proximate to an exit of a radiative surface (e.g., shell) for rejecting heat. In some cases of active thermal control, the temperature sensors may monitor a temperature of the working fluid as it circulates through the tubes of the thermal control system. A temperature of the internal surfaces may be calculated based on a temperature of the working fluid, where temperature may be monitored at different locations of the cold trap. In some implementations, the thermal control system may control temperature by controlling a flow rate of the working fluid. In one example, the thermal control system may control working fluid temperature by incorporating a radiator bypass that varies the flow rate through the radiator/shell of the cold trap. This allows for increased thermal turndown and temperature control. Flow that bypasses the radiator/shell can be mixed with flow that does not bypass the radiator/shell until a desired fluid temperature is achieved. If fluid temperature exiting the radiator/shell is too cold, then bypass flow rate is increased until fluid temperature warms, and if fluid temperature exiting the radiator/shell is too warm, the bypass flow rate is decreased until fluid temperature cools. Additionally or alternatively, the thermal control system may further include a variable speed pump and/or throttling valve to vary the overall flow rate of the working fluid through the thermal control system. This allows for further control of temperature of internal surfaces of the cold trap.

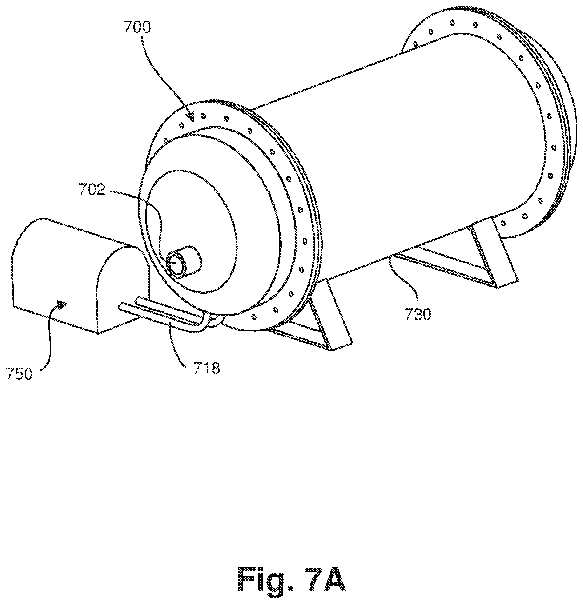

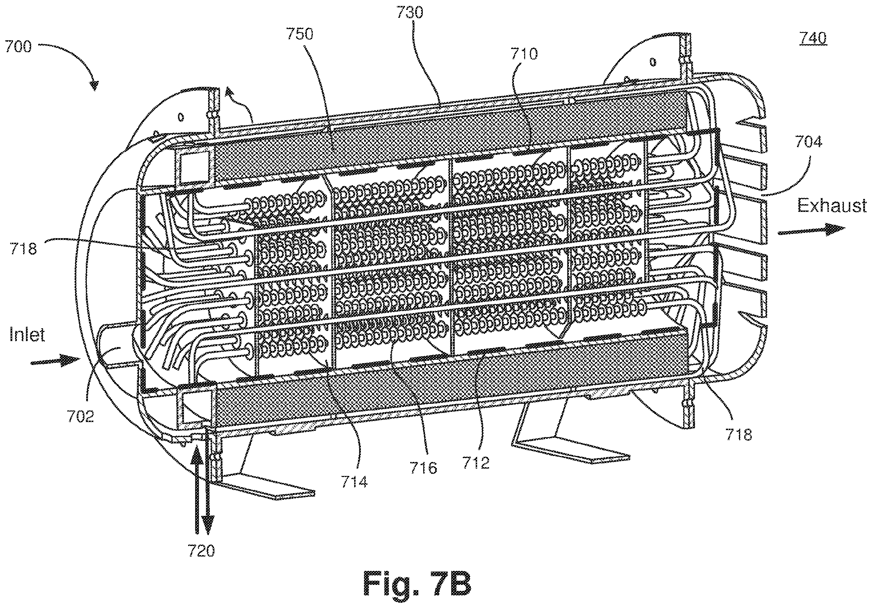

Figure 7A shows a perspective view of an example cold trap for maintaining isothermal temperatures during freeze distillation according to some implementations. Figure 7B shows a cross-sectional schematic illustration of the cold trap in Figure 7A including a thermal control system for maintaining isothermal temperatures during freeze distillation according to some implementations. A cold trap 700 includes an inlet 702 for receiving an incoming gas mixture including a desired chemical species and undesired chemical species, and an outlet 704 for exhausting at least the undesired chemical species. In some implementations, the gas mixture may include water and volatiles such as hydrogen sulfide, carbon dioxide, ammonia, methanol, mercury, sulfur dioxide, methane, hydrogen, ethylene, and carbon monoxide. For example, the desired chemical species may include water and the undesired chemical species may include the volatiles. The desired chemical species and the undesired chemical species may have different phase equilibria.

The cold trap 700 further includes a body 710 in fluid communication with the inlet 702 and the outlet 704. The gas mixture may flow through the body 710 from the inlet 702 to the outlet 704, where the flow may travel axially, vertically, horizontally, circumferentially, and/or circuitously through the body 710. The desired chemical species selectively deposit in a solid phase on internal surfaces of the body 710 of the cold trap 700 without condensing or depositing the undesired chemical species. As shown in Figures 7A and 7B, the body 710 of the cold trap 700 is cylindrical in shape. The body 710 represents a deposition zone for collecting and depositing the desired chemical species as indicated by the dashed lines.

The size of the body 710 may be configured to achieve a desired collection rate. The desired collection rate may depend on the performance requirements of the cold trap 700. In some implementations, the desired water collection rate is between about 0.1 kg/hour and about 10 kg/hour, or between about 0.5 kg/hour and about 5 kg/hour. It will be understood that multiple cold traps 700 may be utilized and connected in series to achieve such water collection rates. In some implementations, a diameter of the body 710 is between about 0.08 m and about 3 m, or between about 0.1 m and about 1.5 m. In some implementations, a length of the body 710 is between about 0.3 m and about 15 m, or between about 0.6 m and about 5 m.

The body 710 includes internal walls 712, baffles 714, and fins 716. The internal walls 712 may enclose a space occupied by the body 710. The body 710 may further include tubes 718 of a thermal control system 720 for carrying working fluid. The tubes 718 may span a length of the body 710. The fins 716 may be connected as appendages to the tubes 718. The fins 716 may wrap around an outer surface of the tubes 718. In Figure 7B, multiple fins 716 may be distributed along the length of each of the tubes 718 as circular disks. The baffles 714 may divide an internal volume of the body 710 into sections and may redirect or redistribute flow of the gas mixture through the body 710. The baffles 714 may be arranged orthogonally from the internal walls 712. In Figure 7B, the baffles 714 are spaced apart as plates, each of the plates occupying a substantial fraction of a cross-sectional area of the body 710. As used herein, a "substantial fraction" may refer to at least occupying over 70% of the cross-sectional area of the body 710. The baffles 714 may have openings or cutouts for permitting gas flow through the body 710.

The internal walls 712, baffles 714, fins 716, and tubes 718 may provide surface area for collection of the desired chemical species. In addition to the internal walls 712, the baffles 714, fins 716, and tubes 718 provide increased surface area for increased collection capacity. The internal walls 712, the baffles 714, the fins 716, and the tubes 718 may be actively cooled by the working fluid flowing through the tubes 718. The internal walls 712, the baffles 714, and the fins 716 may be thermally coupled to the tubes 718. The active cooling may maintain isothermal conditions on the internal surfaces of the body 710 so that the desired chemical species may be selectively deposited.

The arrangement of baffles 714 and fins 716 provide internal geometry to the body 710 that improve flow turning, turbulence, and mixing, thereby improving efficiency of collection. The baffles 714 also increase a path length of the gas mixture flowing through the body 710, increasing a residence time for improving collection efficiency. Thus, not only do the baffles 714 and fins 716 increase surface area, but the baffles 714 and fins 716 increase collection efficiency.

The cold trap 700 may further include a shell 730 facing an outside environment 740. The shell 730 may be disposed outside the body 710. The body 710 constitutes the internal surfaces of the cold trap 700 and the shell 730 constitutes the external surfaces of the cold trap 700. The shell 730 serves to reject heat to the outside environment 740, acting as a radiator through which heat is rejected. The tubes 718 of the thermal control system 720 are thermally coupled to the shell 730. The tubes 718 provide a fluid loop between the body 710 and the shell 730. As heat is absorbed by the working fluid passing through the tubes 718 in the body 710, the heat is rejected to the outside environment 740 by the working fluid passing by the shell 730. Heat is radiated away from the shell 730 and the cooled working fluid is recirculated back to the body 710. In some implementations, the cooled working fluid is recirculated after exiting via a manifold and returning to a pump. Instead of using a discrete component (e.g., small radiator element/block) for radiating heat to the outside environment 740, the shell 730 optimizes surface area by which heat may be rejected. A radiative surface area of the shell 730 is directly proportional to the water collection rate, and directly proportional to the sizing of the body 710. In some implementations, a radiative surface area of the shell 730 is between about 1 m² and about 100 m² or between about 2 m² and about 50 m².

The cold trap 700 rejects heat to the outside environment 740. The outside environment 740 is a cold environment having extremely low temperatures. This allows the cold trap 700 to operate at very low temperatures for performing freeze distillation. In some implementations, the outside environment 740 has a sink temperature equal to or less than about 110 K, or between about 4 K and about 110 K. In some implementations, the outside environment 740 is the moon, Mars, or other extraterrestrial environment. For example, the outside environment 740 is the moon that has a temperature between about 40 K and about 110 K with a pressure of about 1x10⁻⁹ Torr.

The cold trap 700 further includes an insulation layer 750 disposed between the shell 730 and the body 710. The insulation layer 750 is made of thermally insulating material that separates the shell 730 from the body 710 and prevents thermal conduction between the shell 730 and the body 710. Hence, the insulation layer 750 thermally isolates the body 710 from the shell 730 to prevent local cold spots from forming and promoting condensation of the undesired chemical species. The insulation layer 750 separates the portion of the tubes 718 in the body from the portion of the tubes 718 adjacent to the shell 730.

The cold trap 700 may be pressure-regulated by a pressure-regulated exhaust (not shown) at the outlet 704. The pressure-regulated exhaust may include a valve, regulator, or variable restrictor coupled to the outlet 704. Backpressure built up in the body 710 may be controlled by the pressure-regulated exhaust to promote flow of the gas mixture through the body 710. Regulating the backpressure at the outlet 704 modulates a pressure of the incoming gas mixture at the inlet 702. The flow of the gas mixture may be driven by a pressure drop between the inlet 702 and the outlet 704. An upstream pressure is greater than a downstream pressure to provide a pressure differential. In some implementations, the flow of the gas mixture may be supported by forced convection. The pressure in the body 710 is controlled to a desired pressure for achieving selective deposition of the desired chemical species. Too high of a pressure could allow condensation of the undesired chemical species, forming a liquid that could contaminate the desired chemical species. In some implementations, a total pressure in the body 710 is between about 2.6 Pa and about 600 Pa for selective deposition of water.

The cold trap 700 may be temperature-regulated by a thermal control system 720. The thermal control system 720 includes tubes 718 operating as fluid channels for transporting a working fluid. The thermal control system 720 further includes a pump (not shown) for pumping and circulating the working fluid through the tubes 718. The tubes 718 may extend along a length of the body 710, the tubes 718 being thermally coupled to the internal walls 712, the baffles 714, and the fins 716 in the body 710. The tubes 718 may be spaced apart to optimize collection efficiency, provide adequate pressure loss, and decrease system mass. In some implementations, a number of tubes 718 may be between about 5 and about 1000 or between about 10 and about 500. The tubes 718 wrap around and extend along a length of the cold trap 700 in a region between the insulation layer 750 and the shell 730. Thus, the tubes 718 provide a fluid loop structure between the body 710 and the shell 730.

The working fluid circulating in the tubes 718 actively cools internal surfaces of the body 710. The working fluid absorbs heat from the body 710, particularly heat generated by the enthalpy of deposition. The working fluid rejects heat from the body 710 to the shell 730, and the heat is radiated to the outside environment 740 via the shell 730. A temperature of the internal surfaces may be controlled by controlling a temperature of the working fluid. The temperature of the working fluid may be controlled with one or more temperature sensors, one or more pressure sensors, and/or the pump. In some implementations, the temperature of the working fluid may be controlled by varying a flow rate of the working fluid. This can be accomplished by, for example, one or more of a bypass radiator, a variable speed pump, and throttling valve.

The thermal control system 720 maintains isothermal conditions. The thermal control system 720 isothermalizes the internal surfaces of the body 710 for deposition of the desired chemical species in the solid phase without condensing or depositing the undesired chemical species. In other words, the thermal control system 720 maintains a deposition temperature on the internal walls 712, baffles 714, fins 716, and tubes 718 that is within a temperature band. The temperature band may be about +/- 1K of the deposition temperature, about +/- 3K of the deposition temperature, about +/- 5K of the deposition temperature, or about +/- 10K of the deposition temperature. This means that no localized region of the body 710 has a temperature that deviates from the aforementioned limits to form local cold spots. This also means that the body 710 does not deviate from the aforementioned limits during operation. Even with spatial and temporal gradients of ice formation that cause heat transfer to vary over time and space, the thermal control system 720 effectively isothermalizes internal surfaces of the body 710. Moreover, even though the working fluid absorbs heat generated from the body 710, the thermal control system 720 maintains the deposition temperature within the temperature band so that the desired chemical species selectively deposits without condensing or depositing the undesired chemical species. The thermal control system 720 operates with the pressure regulated exhaust so that the pressure and temperature are controlled within a temperature band and pressure band for selective deposition. In some implementations, the deposition temperature is between about 175 K and about 273 K at a pressure between about 2.6 Pa and about 611 Pa. It will be understood that other temperature and pressure bands may be selected from within saturation curves in a phase diagram of the chemical species. Operating at such internal temperatures and pressures causes ice to deposit on internal surfaces of the body 710 and volatiles to be exhausted out of the outlet 704.

Isothermalization is achieved by actively cooled surfaces in the body 710. Active cooling can be accomplished by a single-phase fluid loop or a two-phase fluid loop. The working fluid flowing through the tubes 718 in a single-phase fluid loop may include but is not limited to ammonia, propylene glycol in water, ammonia in water, Galden^{®}, or Novec^{™} HFE. The working fluid flowing through the tubes 718 in a two-phase fluid loop may include but is not limited to ammonia, ammonia in water, or methanol. The working fluid may flow through the tubes 718, enter the body 710 through an interface, circulate from the portion of the tubes 718 in the body 710 to the portion of the tubes 718 adjacent to the shell 730, and exit via a manifold where the working fluid is returned to a pump. Active cooling in the body 710 causes the desired chemical species to form on the tubes 718 as well as the internal walls 712, baffles 714, and fins 716. Specifically, ice is deposited on the tubes 718 as well as the internal walls 712, baffles 714, and fins 716. Heat captured by sensible and latent heat from the water vapor and from the water vapor to ice phase change is rejected by the working fluid. The working fluid rejects the heat from the tubes 718 to the outside environment 740 at the shell 730. After ice is collected in the body 710 of the cold trap 700, the ice may be converted to water vapor by sublimation or converted to liquid water by melting, where the water vapor or liquid water is processed in downstream processing. In some implementations, the volatiles and non-deposited water vapor may be exhausted to the outside environment 740 at the outlet 704 or further processed by another cold trap.

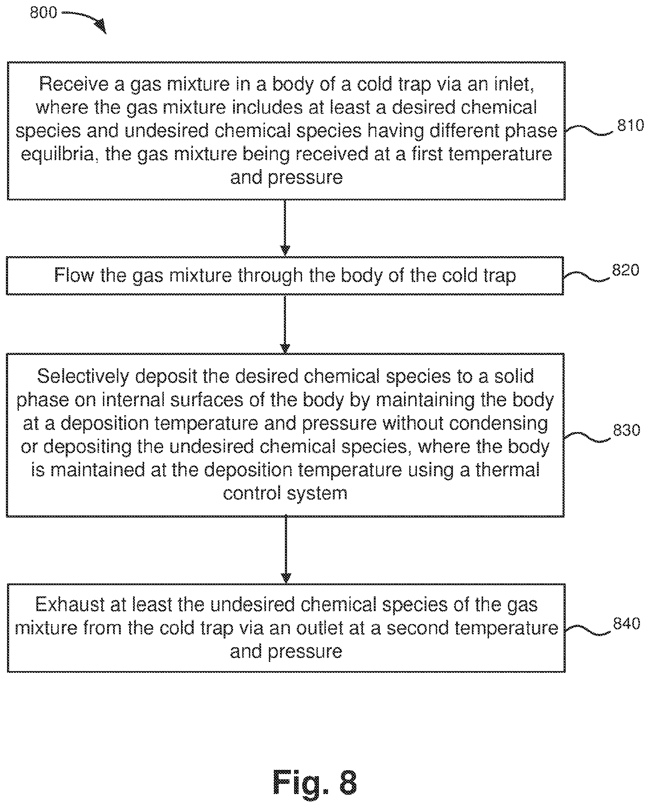

Figure 8 shows a flow diagram of an example method for selective deposition of one or more chemical species in a cold trap according to some implementations. The operations of process 800 may be performed in different orders, in conjunction with each other, and/or with different, fewer, or additional operations. The operations in the process 800 may be performed by a cold trap as discussed herein. An example cold trap is described and shown in Figures 7A and 7B. Other example cold traps are described and shown in Figures 4A and 4B, Figures 5A and 5B, and Figure 6. In some implementations, the blocks of the process 800 may be performed by one or more processors of a control system. In some implementations, the blocks of the process 800 may be implemented, at least in part, according to software stored on one or more non-transitory computer readable media.

At block 810 of the process 800, a gas mixture is received in a body of a cold trap via an inlet. The gas mixture includes at least a desired chemical species and undesired chemical species having different phase equilibria. The gas mixture is received at the inlet at a first temperature and pressure. In some implementations, the desired chemical species includes water and the undesired chemical species include volatiles. The volatiles may include hydrogen sulfide, carbon dioxide, ammonia, methanol, mercury, sulfur dioxide, methane, hydrogen, ethylene, carbon monoxide, or combinations thereof.

The first temperature and pressure may refer to an upstream temperature and upstream pressure. In some implementations, the gas mixture may be received from a thermal mining system or other upstream processing system that collects the gas mixture. For example, the thermal mining system or other upstream processing system may collect the gas mixture by sublimating the desired chemical species and undesired chemical species from regolith-based resources. The thermal mining system or other upstream processing system may be fluidly coupled to the inlet of the cold trap. The first temperature and pressure may be set to ensure that the chemical species in the gas mixture are received in a vapor state. In some implementations, the upstream temperature may be greater than about 230 K to ensure the incoming temperature is above a freezing temperature of the desired chemical species (e.g., water). However, the upstream temperature may be relatively low so that the required heat removal is not as significant for operating the cold trap. For example, the upstream temperature may be only about 10K to 25K, about 15K to about 25K, or about 20 K above the nominal freezing temperature of water. Such low starting temperatures may be possible because of very low temperatures of an outside environment such as an extraterrestrial environment. In some implementations, the upstream pressure may be between about 2.6 Pa and about 600 Pa. Thus, the first temperature may be between about 230 K and about 270 K and first pressure may be between about 15 Pa and about 600 Pa at the inlet of the body, ensuring that the gas mixture is received below a triple point of the desired chemical species. It will be understood that the temperature and pressure may be selected depending on the composition of the gas mixture.

At block 820 of the process 800, the gas mixture is flowed through the body of the cold trap. The gas mixture may be driven across the body of the cold trap by a pressure drop. The gas mixture may flow along a complex flow path, including but not limited to an axial, vertical, horizontal, circumferential, and/or circuitous flow path. In some implementations, the gas mixture may be driven across the body of the cold trap by forced convection. The operating pressure of the body may be selected by modulating the first pressure at the inlet and modulating a second pressure (backpressure) at an outlet of the body. Put another way, the operating pressure may be controlled by controlling the upstream environment and/or the downstream environment, or controlling an interface to the upstream environment and/or an interface to the downstream environment. How much flow of gas mixture is coming in can be regulated by a valve, pressure regulator, or variable restrictor at the inlet, and how much backpressure is produced can be regulated by a valve, pressure regulator, or variable restrictor at the outlet. The pressure drop through the body causes the gas mixture to flow through the body and interface with internal surfaces of the body. The pressure drop through the body can be governed or influenced by the size of the body and/or the internal geometry of the body. Moreover, the pressure drop can be governed or influenced by the deposition of the desired chemical species. As more of the desired chemical species deposits, the pressure also drops. Particularly where the desired chemical species makes up a significant portion or volume fraction of the gas mixture, deposition of the desired chemical species can impact the pressure drop through the body. The pressure drop is sufficient to drive the gas mixture through the particular size and internal geometry of the body from the inlet to the outlet.

At block 830 of the process 800, the desired chemical species is selectively deposited to a solid phase on internal surfaces of the body by maintaining the body at a deposition temperature and pressure without condensing or depositing the undesired chemical species. The body is maintained at the deposition temperature using a thermal control system. The deposition temperature may be a temperature within a temperature band at the operating pressure of the cold trap that causes freeze distillation of the desired chemical species. At a selected operating pressure, the temperature band may be a temperature range between a freezing point of the desired chemical species (e.g., water) and a freezing point of the undesired chemical species (e.g., methanol) having the next highest freezing point. For instance, the temperature band may be between about 247 K and about 273 K at an operating pressure of about 600 Pa, and the temperature band may be between about 175 K and about 220 K at an operating pressure of about 2.6 Pa.

The thermal control system can reliably maintain the deposition temperature by actively or passively cooling the internal surfaces of the body to keep within the temperature band. In some implementations, the thermal control system can actively cool the internal surfaces of the body. In some implementations, the thermal control system can include a pump, a plurality of pipes passing through the body of the cold trap and fluidly coupled to the plurality of pipes, and a working fluid that flows through the plurality of pipes. The working fluid may flow in a single-phase fluid loop or a two-phase fluid loop through the plurality of pipes. The working fluid may absorb the sensible heat from the desired chemical species and the latent heat of phase change of the desired chemical species, and the working fluid may reject the absorbed heat to the outside environment. Varying the flow rate of the working fluid through the thermal control system can affect a fluid temperature for controlling a temperature of the internal surfaces of the body.

In some implementations, the thermal control system can passively or semi-passively cool the internal surfaces of the body. In one example, the thermal control system can include an insulation layer between the body and a shell of the cold trap, where the insulation layer varies in insulation thickness along a length of the cold trap. In another example, the thermal control system can include a plurality of cryocoolers to move heat from internal surfaces to an external surface area (e.g., shell or radiator element) of the cold trap. In another example, the thermal control system can include a plurality of thermoelectric coolers to move heat from internal surfaces to the external surface area (e.g., shell or radiator element) of the cold trap. In yet another example, the thermal control system can include one or more actuating radiators or louvres. In still yet another example, the thermal control system can include one or more heat pumps and/or one or more thermosiphons.

The internal surfaces of the body include internal walls and one or more internal structural components. In some implementations, the one or more internal structural components include one or more baffles and one or more fins. The baffles act to effectively increase path length and increase residence time of the gas mixture flow. Each of the baffles occupy a substantial fraction of the cross-sectional area of the body of the cold trap. The fins act to promote mixing and turbulence and also improve isothermal surface area. The fins may be appendages to external surfaces of the plurality of pipes. The one or more internal structural components may further include the plurality of pipes. The desired chemical species may be selectively deposited in the solid phase on the internal walls, baffles, fins, pipes, and existing frost layers of the cold trap. In some implementations, the thermal control system actively cools the internal surfaces of the cold trap, which can include the internal walls, baffles, fins, pipes, and existing frost layers, to the deposition temperature during selective deposition.

In some implementations, maintaining the body at the deposition temperature includes rejecting absorbed heat from the body to the outside environment. In some implementations, the outside environment is substantially colder than the deposition temperature. In some implementations, the outside environment has a sink temperature equal to or less than about 110 K, or between about 4 K and about 110 K. In some implementations, the outside environment is the moon, Mars, or other extraterrestrial environment that serves as a heat sink to the cold trap. The thermal control system may move the absorbed heat from the body to the shell of the cold trap, where the shell acts as a radiator or radiative surface exposed to the outside environment. In some implementations, the cold trap includes an insulation layer that thermally isolates the body from the shell of the cold trap. This prevents local cold spots from forming in the body of the cold trap during selective deposition.

In some implementations, maintaining the body at the deposition temperature includes circulating the working fluid through the plurality of pipes that extend along a length of the cold trap. The pipes extend axially through the body for absorbing heat. The pipes are continuous and extend along a region between the body and the shell, where the pipes are thermally coupled to the shell for rejecting the absorbed heat to the outside environment.

At block 840 of the process 800, at least the undesired chemical species of the gas mixture are exhausted from the cold trap via an outlet at a second temperature and pressure. Some of the desired chemical species not deposited on internal surfaces of the body of the cold trap are also exhausted at the outlet. In some implementations, the undesired chemical species are exhausted in a gas phase to the outside environment via the outlet. In some implementations, the undesired chemical species are exhausted in a gas phase to another cold trap (i.e., second cold trap) connected in series at the outlet. The second cold trap may serve to collect even more of the desired chemical species. Additionally or alternatively, the second cold trap may be maintained at a different deposition temperature to selectively deposit another chemical species. For instance, the different deposition temperature can be lower than the deposition temperature for selectively depositing the desired chemical species. Other volatiles in the gas mixture may provide useful resources for collection in the second cold trap. In some implementations, the undesired chemical species are exhausted for downstream processing.

The first temperature and pressure are higher than the second temperature and pressure. The pressure differential between the first pressure (upstream pressure) and the second pressure (downstream pressure) provides a pressure drop so that the gas mixture can be passed via a pressure gradient-driven flow. Active cooling of the gas mixture causes a temperature drop between the first temperature and the second temperature. The second temperature at the outlet may be controlled by the thermal control system. Deposition of chemical species also provides a pressure drop between the first pressure and the second pressure. The second pressure at the outlet may be controlled by a pressure-regulated exhaust to modulate backpressure.

In some implementations, the process 800 further includes melting or sublimating the desired chemical species deposited and collected on internal surfaces of the body of the cold trap by a heater. This converts the desired chemical species from the solid phase to a liquid or gas phase. This may occur when the cold trap is "full" and no longer able to collect additional amounts of the desired chemical species in the solid phase. The heater may elevate the temperature of the internal surfaces of the body, or elevate the temperature of the coolant to distribute heat throughout the internal surfaces of the body, to cause melting or sublimation of the desired chemical species. The desired chemical species in the liquid or gas phase may be collected and transported for downstream processing. Thus, the internal surfaces of the cold trap may be restored for performing additional cycles of freeze distillation. These cycles of freeze distillation and melting/sublimation may be repeated multiple times until a desired amount of the desired chemical species is collected, and undesired chemical species accidentally trapped are released to enhance purity of the collected desired species.

In some implementations, downstream processing of water in liquid or gas phase may involve further purification of the water or conversion of the water to hydrogen and oxygen. In some implementations, a water purification assembly may include a membrane-based water separator, chemical scrubber, or combinations thereof. The chemical scrubber may trap and separate out residual volatiles retained with the water. By way of an example, an ammonia scrubber may neutralize ammonia by chemical reaction with dilute sulfuric acid to form a salt, which can be subsequently removed. By way of another example, a chemical scrubber may neutralize contaminants such as hydrogen sulfide, sulfur dioxide, and ethylene. The membrane-based water separator may include a highly selective barrier such as an ionomer membrane. The ionomer membrane may include a non-porous fluorinated ionomer membrane with exposed sulfonic acid groups. Water vapor may be selectively permeated through the ionomer membrane while impermeable to various volatiles. The permeated water vapor may be further polished or collected in a condenser. In some implementations, the purified water may be electrolyzed to produce hydrogen and oxygen using an electrolyzer. The oxygen may be stored for use in life support applications and/or propulsion. The hydrogen may be stored for use in propulsion. Aspects of downstream processing of water recovered from regolith-based resources are further described in U.S. Patent Application No. 16/410,198 entitled, "IN-SITU RESOURCE UTILIZATION-DERIVED WATER PURIFICATION AND HYDROGEN AND OXYGEN PRODUCTION," filed May 13, 2019, which is incorporated herein by reference in its entirety and for all purposes.

Although the foregoing disclosed systems, methods, apparatuses, processes, and compositions have been described in detail within the context of specific implementations for the purpose of promoting clarity and understanding, it will be apparent to one of ordinary skill in the art that there are many alternative ways of implementing foregoing implementations which are within the spirit and scope of this disclosure. Accordingly, the implementations described herein are to be viewed as illustrative of the disclosed inventive concepts rather than restrictively, and are not to be used as an impermissible basis for unduly limiting the scope of any claims eventually directed to the subject matter of this disclosure.

For the avoidance of doubt, the application extends to the subject-matter set out in the following numbered paragraphs ("Para" or "Paras"):
1. A cold trap comprising:
   an inlet for receiving a gas mixture comprising a desired chemical species and undesired chemical species, wherein the desired chemical species and undesired chemical species have different phase equilibria;
   a body in fluid communication with the inlet and through which the gas mixture flows, wherein the body includes internal walls and one or more internal structural components;
   an outlet for exhausting at least the undesired chemical species from the cold trap, wherein the body is in fluid communication with the outlet;
   a shell thermally exposed to an environment outside of the cold trap; and
   a thermal control system configured to control a temperature of the internal walls and one or more internal structural components, wherein the thermal control system maintains a deposition temperature at a pressure that selectively deposits the desired chemical species to a solid phase on the internal walls and the one or more internal structural components without condensing or depositing the undesired chemical species.
2. The cold trap of Para 1, wherein the desired chemical species includes water and the undesired chemical species includes volatiles.
3. The cold trap of Para 2, wherein the volatiles include hydrogen, hydrogen sulfide, sulfur dioxide, ammonia, carbon dioxide, carbon monoxide, methane, ethylene, or mercury.
4. The cold trap of Para 1, wherein the outlet modulates a backpressure to control the pressure in the body.
5. The cold trap of Para 1, wherein the thermal control system cools the internal walls and one or more internal structural components to the deposition temperature and rejects heat absorbed by phase change to the environment outside the cold trap at the shell.
6. The cold trap of Para 1, wherein the one or more internal structural components includes a plurality of baffles to increase a path length of the gas mixture flowing through the body, a plurality of tubes extending axially through the body, and a plurality of fins disposed on the tubes to increase mixing of the gas mixture flowing through the body.
7. The cold trap of Para 6, wherein the thermal control system includes a working fluid flowing through the plurality of tubes, the plurality of tubes being thermally coupled to the internal walls, the one or more internal structural components, and the shell.
8. The cold trap of Para 7, wherein the thermal control system includes a pump to circulate the working fluid through the plurality of tubes to isothermalize the internal walls and the one or more internal structural components to within +/- 5K of the deposition temperature while absorbing heat generated in the body from selective deposition and rejecting the heat to the environment outside the cold trap.
9. The cold trap of any one of Paras 1-8, wherein the environment outside the cold trap has a sink temperature equal to or less than about 110 K.
10. The cold trap of any one of Paras 1-8, wherein the deposition temperature is between about 175 K and about 273 K at a pressure between about 2.6 Pa and about 611 Pa.
11. The cold trap of Para 1, further comprising:
   an insulation layer disposed between the body and the shell, wherein the insulation layer thermally isolates the body from the shell.
12. The cold trap of any one of Paras 1-8, wherein the thermal control system includes one or more thermosiphons connected to a heat sink or radiator element, wherein the one or more thermosiphons draw heat generated in the body from selective deposition to the heat sink or radiator element.
13. The cold trap of any one of Paras 1-8, wherein the thermal control system includes one or more actuating radiators thermally coupled to the body and configured to operate in an open and closed position, wherein the closed position is insulated from the environment outside the cold trap and the open position is exposed to the environment outside the cold trap, wherein the one or more actuating radiators are actuated to an open position in response to the internal walls of the cold trap exceeding a threshold temperature.
14. The cold trap of any one of Paras 1-8, wherein the thermal control system includes one or more thermoelectric coolers thermally coupled to the body.
15. The cold trap of any one of Paras 1-8, wherein the thermal control system includes one or more cryocoolers thermally coupled to the body.
16. A system comprising:
   a first cold trap for receiving a gas mixture comprising multiple gas species having different phase equilibria, wherein the first cold trap includes a first thermal control system and a first pressure-regulating system to maintain a first temperature and first pressure to selectively deposit a first species to a solid phase in the first cold trap without condensing or depositing other species of the multiple gas species; and
   a second cold trap in fluid communication with the first cold trap, wherein the second cold trap includes a second thermal control system and a second pressure-regulating system to maintain a second temperature and second pressure to selectively deposit a second species to a solid phase in the second cold trap without condensing or depositing other species of the multiple gas species.
17. The system of Para 16, wherein the first species includes water, and wherein the second species includes a volatile.
18. The system of Para 16, where each of the first cold trap and the second cold trap include a body having internal walls and one or more internal structural components and a shell thermally exposed to an environment outside the first and second cold traps.
19. A method of selective deposition of one or more species in a cold trap, the method comprising:
   receiving a gas mixture in a body of a cold trap via an inlet, wherein the gas mixture includes at least a desired chemical species and undesired chemical species having different phase equilibria, the gas mixture being received at a first temperature and first pressure;
   flowing the gas mixture through the body of the cold trap;
   selectively depositing the desired chemical species to a solid phase on internal surfaces of the body by maintaining the body at a deposition temperature and pressure without condensing or depositing the undesired chemical species, wherein the body is maintained at the deposition temperature using a thermal control system; and
   exhausting at least the undesired chemical species of the gas mixture from the cold trap via an outlet at a second temperature and second pressure.
20. The method of Para 19, wherein the desired chemical species includes water and the undesired chemical species includes a volatile.
21. The method of Para 19, wherein maintaining the body at the deposition temperature includes circulating working fluid of the thermal control system through tubes extending axially through the body and through a region between the body and a shell disposed outside the body, wherein the shell is thermally exposed to an environment outside the cold trap.

## Claims

1. A cold trap (120, 350, 430, 540, 620, 700) comprising:
an inlet (380, 702) for receiving a gas mixture comprising a desired chemical species and undesired chemical species, wherein the desired chemical species and undesired chemical species have different phase equilibria;
a body (710) in fluid communication with the inlet and through which the gas mixture flows, wherein the body includes internal walls (712) and one or more internal structural components;
an outlet (390, 704) including a pressure-regulated exhaust for exhausting at least the undesired chemical species from the cold trap, wherein the body is in fluid communication with the outlet;
a shell (730) thermally exposed to an environment (740) outside of the cold trap; and
a thermal control system (400, 500, 600) configured to control a temperature of the internal walls and one or more internal structural components, wherein the thermal control system includes a plurality of tubes (718) that carries a working fluid, wherein the plurality of tubes extends axially through the body and are thermally coupled to the shell so that the working fluid rejects heat to the environment outside the cold trap.

2. The cold trap of claim 1, wherein the desired chemical species from the gas mixture received at the inlet includes water and the undesired chemical species includes volatiles, such as hydrogen, hydrogen sulfide, sulfur dioxide, ammonia, carbon dioxide, carbon monoxide, methane, ethylene, or mercury.

3. The cold trap of claim 1, wherein the thermal control system comprises one or more temperature sensors and a pump configured to circulate the working fluid through the plurality of tubes and configured to control a temperature of the working fluid by varying a flow rate of the working fluid.

4. The cold trap of claim 3, wherein the one or more internal structural components includes a plurality of baffles (714) to increase a path length of the gas mixture flowing through the body and a plurality of fins (716) disposed on the tubes to increase mixing of the gas mixture flowing through the body.

5. The cold trap of claim 4, wherein the plurality of tubes are thermally coupled to the internal walls, the one or more internal structural components, and the shell, wherein the thermal control system is configured to isothermalize the plurality of tubes, the internal walls, the baffles, and the fins to a deposition temperature using the one or more temperature sensors and the pump to selectively deposit the desired chemical species to a solid phase on the plurality of tubes, the internal walls, the baffles, and the fins without condensing or depositing the undesired chemical species.

6. The cold trap of claim 5, wherein the thermal control system is configured to isothermalize the plurality of tubes, the internal walls, the baffles, and the fins to within +/- 5K of the deposition temperature using the one or more temperature sensors and the pump while absorbing heat generated in the body from selective deposition and rejecting the heat to the environment outside the cold trap.

7. The cold trap of claim 1, further comprising:
an insulation layer (750) disposed between the body and the shell, wherein the insulation layer thermally isolates the body from the shell, wherein each of the tubes extends through a region between the shell and the insulation layer.

8. The cold trap of any one of claims 1-7, wherein the thermal control system includes
one or more thermosiphons (420) or heat pipes (410) connected to a heat sink or radiator element (440), wherein the one or more thermosiphons or heat pipes draw heat generated in the body from selective deposition to the heat sink or radiator element.

9. The cold trap of any one of claims 1-7, wherein the thermal control system includes
one or more actuating radiators (510) thermally coupled to the body and configured to operate in an open and closed position, wherein the closed position is insulated from the environment outside the cold trap and the open position is exposed to the environment outside the cold trap, wherein the one or more actuating radiators are actuated to an open position in response to the internal walls of the cold trap exceeding a threshold temperature.

10. The cold trap of any one of claims 1-7, wherein the thermal control system includes
one or more thermoelectric coolers thermally coupled to the body.

11. The cold trap of any one of claims 1-7, wherein the thermal control system includes
one or more cryocoolers thermally coupled to the body.

12. A method (800) of selective deposition of one or more species in a cold trap, the method comprising:
receiving a gas mixture (810) in a body of the cold trap via an inlet, wherein the gas mixture includes at least a desired chemical species and undesired chemical species having different phase equilibria, the gas mixture being received at a first temperature and first pressure;
flowing the gas mixture (820) through the body of the cold trap, wherein the body includes internal walls and one or more internal structural components, wherein the cold trap includes a shell that is disposed on or outside the body and is thermally exposed to an environment outside the cold trap;
modulating the first pressure at the inlet using a first valve, first pressure regulator, or first variable restrictor and modulating a second pressure at an outlet using a second valve, a second pressure regulator, or a second variable restrictor to select the operating pressure of the body;
selectively depositing the desired chemical species (830) to a solid phase on internal surfaces of the body by maintaining the body at a deposition temperature and pressure without condensing or depositing the undesired chemical species, wherein the body is maintained at the deposition temperature using a thermal control system, wherein the thermal control system includes a plurality of tubes that carries a working fluid, wherein the plurality of tubes extends axially through the body and are thermally coupled to the shell so that the working fluid rejects heat to the environment outside the cold trap; and
exhausting at least the undesired chemical species (840) of the gas mixture from the cold trap.

13. The method of claim 12, wherein the desired chemical species includes water and the undesired chemical species includes a volatile.

14. The method of claim 12, wherein maintaining the body at the deposition temperature includes controlling a flow rate of the working fluid through the plurality of tubes using a pump.

15. The method of claim 12, wherein the environment outside the cold trap has a sink temperature equal to or less than about 110 K, and/or wherein the deposition temperature is between about 175 K and about 273 K at a pressure between about 2.6 Pa and about 611 Pa.
